(19) Europäisches Patentamt / European Patent Office / Office européen des brevets

(11) **EP 4 132 847 B1**

(12) **FASCICULE DE BREVET EUROPEEN**

(45) Date de publication et mention de la délivrance du brevet:
**06.03.2024 Bulletin 2024/10**

(21) Numéro de dépôt: **21726435.7**

(22) Date de dépôt: **09.04.2021**

(51) Classification Internationale des Brevets (IPC):
**B64C 11/00** (2006.01)    **B64C 11/30** (2006.01)

(52) Classification Coopérative des Brevets (CPC):
**B64C 11/00; B64C 11/30**

(86) Numéro de dépôt international:
**PCT/FR2021/050636**

(87) Numéro de publication internationale:
**WO 2021/205133 (14.10.2021 Gazette 2021/41)**

(54) **PROCEDE DE DETERMINATION DU CALAGE ANGULAIRE D'UNE RANGEE ANNULAIRE D'AUBES DE STATOR**

VERFAHREN ZUR BESTIMMUNG DER WINKELEINSTELLUNG EINER RINGFÖRMIGEN REIHE VON STATORSCHAUFELN

METHOD FOR DETERMINING THE ANGULAR SETTING OF AN ANNULAR ROW OF STATOR BLADES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2020 FR 2003639**

(43) Date de publication de la demande:
**15.02.2023 Bulletin 2023/07**

(73) Titulaire: **SAFRAN**
**75015 Paris (FR)**

(72) Inventeurs:
• **GIANNAKAKIS, Panagiotis**
**77550 MOISSY-CRAMAYEL (FR)**
• **RIERA, William, Henri, Joseph**
**77550 MOISSY-CRAMAYEL (FR)**

(74) Mandataire: **Ernest Gutmann - Yves Plasseraud S.A.S.**
**66, rue de la Chaussée d'Antin**
**75009 Paris (FR)**

(56) Documents cités:
EP-A1- 3 159 523          FR-A1- 3 082 230
GB-A- 2 081 393          GB-A- 2 461 811
US-A1- 2016 010 487

## Description

Domaine technique de l'invention

Le présent document concerne la détermination du calage angulaire d'une rangée annulaire d'aubes de stator agencée en aval d'une hélice de propulsion dans un système propulsif d'un aéronef.
Un exemple de l'art antérieur est donné par le document EP3159523 A1.

Etat de la technique antérieure

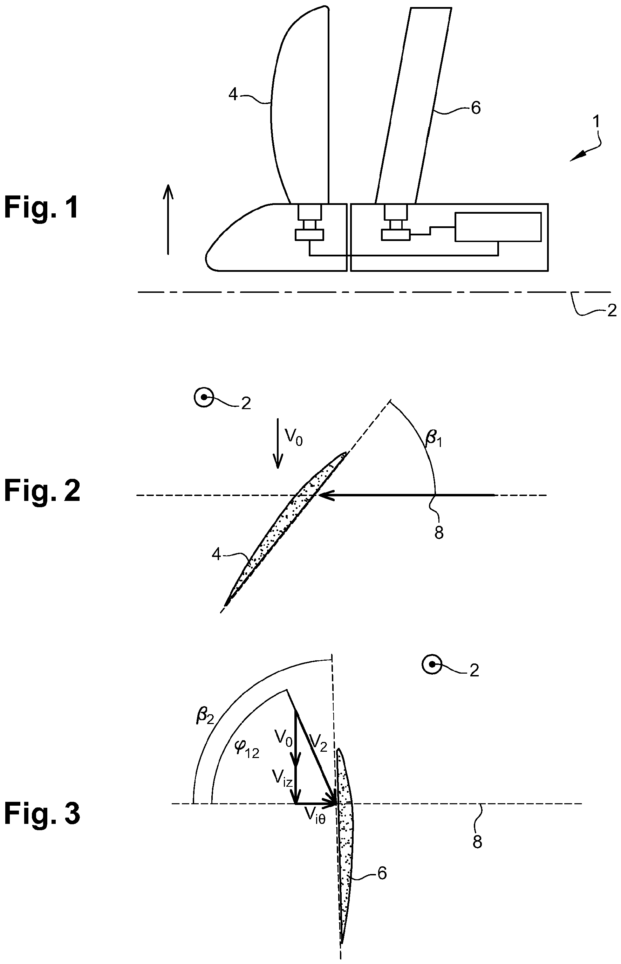

Classiquement, un aéronef, tel qu'illustré en Figure 1, comprend un système propulsif 1 d'axe longitudinal 2 comportant une hélice de propulsion 4 formée d'une rangée annulaire d'aubes mobiles autour de l'axe longitudinal 2. Une rangée annulaire d'aubes de stator 6 est agencée en aval de ladite hélice de propulsion 4 afin de convertir la giration induite par l'hélice de propulsion 4 en vitesse axiale d'avance et augmenter ainsi la poussée générée. L'amont et l'aval sont définis par rapport au sens de circulation des gaz au sein dudit système propulsif. Il est connu de réaliser un calage angulaire des aubes de l'hélice de propulsion 4 afin d'optimiser la propulsion de l'aéronef. Si le calage des aubes de stator 6 est également connu, néanmoins, aucune précision n'est donnée concernant le processus et les calculs nécessaires pour parvenir à un calage angulaire optimisé de ladite rangée annulaire d'aubes de stator 6 en fonction de la phase de vol.
L'implémentation de lois de pilotage dudit calage angulaire est complexe et il n'existe pas de système optimisé, simple et efficace permettant de caler angulairement une rangée annulaire d'aubes de stator 6 agencée en aval d'une hélice de propulsion 4 d'un système propulsif d'un aéronef, laquelle hélice est également à calage variable.
Le présent document vise à remédier à ces inconvénients, de manière simple, fiable et peu onéreuse.

Présentation de l'invention

Le présent document concerne un procédé de détermination du calage angulaire d'une rangée annulaire d'aubes de stator agencée en aval d'une hélice de propulsion d'un système propulsif d'axe longitudinale, ladite rangée annulaire d'aubes de stator recevant un écoulement d'air ayant une vitesse $V_2$ incluant une composante longitudinale $V_{iz}$ et une composante tangentielle $V_{i\theta}$ associées à la vitesse de giration générée par l'hélice de propulsion, le procédé comprenant les étapes : établir un modèle théorique de l'hélice de propulsion utilisant une puissance $P_1$ et un régime mécanique $N_1$ associés à ladite hélice de propulsion, et les conditions de vol comprenant une vitesse du flux d'air incident sur l'hélice de propulsion, l'altitude dudit système propulsif et la température ambiante ; déterminer un calage angulaire de ladite hélice de propulsion à partir dudit modèle théorique ; à partir dudit modèle théorique de l'hélice de propulsion, définir des paramètres adimensionnés incluant au moins un coefficient de puissance $C_{p,1}$, un coefficient de traction $C_{T,1}$ et un ratio d'avancement $J_1$ de ladite hélice de propulsion définis par les formules suivantes :

$$C_{P,1} = \frac{P_1}{\rho \cdot N_1^3 \cdot D_1^5}$$

$$C_{T,1} = \frac{T_1}{\rho \cdot N_1^2 \cdot D_1^4}$$

$$J_1 = \frac{V_0}{N_1 \cdot D_1}$$

où $\rho$ correspond à la densité d'un air ambiant, $V_0$ correspond à une vitesse de vol dudit système propulsif, $N_1$ correspond au dit régime mécanique de ladite hélice de propulsion, $D_1$ correspond à un diamètre de ladite hélice de propulsion, $P_1$ correspond à ladite puissance de ladite hélice de propulsion, $T_1$ correspond à une traction de ladite hélice de propulsion ; calculer la composante longitudinale $V_{iz}$ et la composante tangentielle $V_{i\theta}$ de ladite vitesse $V_2$ du flux d'air incident sur ladite rangée annulaire d'aubes de stator à partir desdits paramètres adimensionnés et en déduire un angle $\varphi_{12}$ entre ladite vitesse du flux d'air incident sur ladite rangée annulaire d'aubes de stator et un plan de rotation de ladite hélice de propulsion ; déterminer un calage angulaire à appliquer à ladite rangée annulaire d'aubes de stator à partir dudit angle, d'un nombre de Mach associé à la vitesse du flux d'air incident sur l'hélice de propulsion et d'une base de données associant à chaque dit angle, différents calages angulaires de ladite rangée annulaire d'aubes de stator obtenus pour différents nombres de Mach.

Une base de données est préconstruite de façon à faciliter le calage angulaire en temps réel en fonction de la position de l'hélice de propulsion. En effet, à partir d'une puissance et d'un régime mécanique associés à ladite hélice de propulsion, d'une vitesse du flux d'air incident sur l'hélice de propulsion, de l'altitude dudit système propulsif et de la température ambiante, le calage angulaire de l'hélice de propulsion est obtenu et le procédé permet, par la suite, de déterminer le calage angulaire optimal de chacune des aubes de stator à partir de la base de données.

La façon de déterminer le calage angulaire à appliquer à ladite rangée annulaire d'aubes de stator proposée dans le présent document rend le pilotage de ladite rangée annulaire d'aubes de stator plus facile à implémenter, plus robuste aux changements des conditions de vol telles que la vitesse du flux d'air incident sur l'hélice de propulsion, l'altitude dudit système propulsif et la température ambiante. La température ambiante désigne ici la température environnante dans laquelle baigne le système propulsif.

Il est possible d'obtenir une poussée optimale du système de propulsion grâce au calage angulaire optimal de ladite rangée annulaire d'aubes de stator en fonction du calage de l'hélice de propulsion.

Ladite composante axiale $V_{iz}$ de ladite vitesse $V_2$ du flux d'air incident sur la rangée annulaire d'aubes de stator peut être calculée à partir de la formule suivante :

$$V_{iz} = \frac{V_0}{2\,J_1}\left[\sqrt{J_1^2 + K_1 \cdot C_{T,1}} - J_1\right]$$

où $K_1$ est une constante reliée à la dimension radiale de l'hélice de propulsion.

Ladite composante tangentielle $V_{i\theta}$ de ladite vitesse $V_2$ du flux d'air incident sur la rangée annulaire d'aubes de stator peut être calculée à partir de la formule suivante:

$$V_{i\theta} = K_2 \cdot \frac{V_0 \cdot C_{P,1}}{J_1} \cdot \frac{1}{J_1 + \sqrt{J_1^2 + K_1 \cdot C_{T,1}}}$$

où $K_1$ et $K_2$ sont des constantes reliées à la dimension radiale de l'hélice de propulsion.

Ledit angle $\varphi_{12}$ peut suivre la formule suivante : $\varphi_{12} = \frac{180}{\pi}\tan^{-1}\left(\frac{V_0 + V_{iz}}{V_{i\theta}}\right)$ .

Ledit calage angulaire $\beta_2$ de ladite rangée annulaire d'aubes de stator peut être communiqué par un système FADEC à des actuateurs qui contrôlent le calage angulaire $\beta_2$ de ladite rangée annulaire d'aubes de stator.

De part son fonctionnement, le présent procédé nécessite moins de données et est donc plus facile à implémenter dans un calculateur tel qu'un FADEC (Full Authority Digital Engine Control).

La base de données peut être une table construite par simulation ou essai dans laquelle plusieurs conditions de fonctionnement sont calculées à partir de toutes les combinaisons des paramètres tels que le régime rotor N1, le nombre de Mach de vol, le calage angulaire $\beta_1$ de l'hélice de propulsion et le calage angulaire $\beta_2$ de ladite rangée annulaire d'aubes de stator, donnant une table de coefficient de traction $C'_{T,2}$ maximisé en fonction du nombre de Mach de vol, de l'angle $\varphi_{12}$ et du calage angulaire $\beta_2$ de ladite rangée annulaire d'aubes de stator. L'avantage de ladite base de données est qu'elle permet un accès à l'information très rapide. En effet, une fois ladite base de données réalisée, une simple lecture de la valeur optimale du calage angulaire $\beta_2$ de ladite rangée annulaire d'aubes de stator est nécessaire. La base de donnée telle qu'elle est constituée est plus légère et donc intégrable au FADEC.

Brève description des figures

[Fig. 1] est une vue schématique d'un système à hélice de propulsion avec une rangée annulaire d'aubes de stator.
[Fig. 2] est une vue schématique de l'écoulement de l'air et plus précisément de la vitesse de cet écoulement reçue par une hélice de propulsion.
[Fig. 3] est une vue schématique de l'écoulement de l'air et plus précisément de la vitesse de cet écoulement reçue par la rangée annulaire d'aubes de stator à l'aval de l'hélice de propulsion illustrée en Fig.3.
[Fig. 4] est un diagramme représentant le procédé de détermination du calage angulaire d'une hélice de propulsion et du calage angulaire de la rangée annulaire d'aubes de stator en aval de ladite hélice de propulsion.
[Fig. 5] est un diagramme schématique du fonctionnement du modèle de calage de la rangée annulaire d'aubes de stator.

Description détaillée de l'invention

La figure 2 illustre un écoulement de l'air à l'entrée d'une hélice de rotation 4 d'un système propulsif 1 d'axe longitudinal 2 selon la figure 1. Lorsque l'hélice de propulsion 4 présente un calage angulaire $\beta_1$, elle reçoit alors de l'air à une vitesse de vol $V_0$ orienté perpendiculairement à l'axe longitudinal 2.

Dans une telle configuration, telle qu'illustrée en Figure 3, une rangée annulaire d'aubes de stator 6 située en aval de ladite hélice de propulsion 4 reçoit alors un écoulement d'air ayant une vitesse $V_2$ ayant une composante longitudinale comprenant ladite vitesse de vol $V_0$ (uniquement longitudinale) et d'une vitesse longitudinale $V_{iz}$ et une composante tangentielle $V_{i\theta}$ où $V_{iz}$ représente la composante longitudinale et $V_{i\theta}$ la composante tangentielle associées à la vitesse de giration générée par l'hélice de propulsion 6.

L'angle $\varphi_{12}$ entre ladite vitesse du flux d'air incident sur ladite rangée annulaire d'aubes de stator 6 et un plan de rotation 8 de ladite hélice de propulsion 4 est très important pour la définition des performances aérodynamiques de la rangée annulaire d'aubes de stator 6. En combinaison avec le calage angulaire $\beta_2$ à appliquer à ladite rangée annulaire d'aubes de stator 6, l'angle $\varphi_{12}$ définit l'incidence. Si l'incidence est trop élevée, un décrochage de la rangée annulaire d'aubes de stator 6 est observé. Ce décrochage entraîne un niveau de pertes de pression élevé et une giration importante, ce qui réduit l'efficacité propulsive de l'hélice de propulsion 4.

L'incidence doit donc rester dans une plage acceptable définie selon la robustesse aérodynamique du profil utilisé, connue lors de sa conception. Il existe, en outre, une incidence optimale pour laquelle la performance de la rangée annulaire d'aubes de stator 6 est maximum. Afin d'optimiser la performance du système propulsif 1, il est donc nécessaire d'être proche de cette incidence pendant toute la phase de vol. Le calage angulaire $\beta_2$ à appliquer à ladite rangée annulaire d'aubes de stator 6 doit donc être piloté par ledit angle $\varphi_{12}$.

Ainsi, le présent document propose une manière efficace de combiner les paramètres influençant l'aérodynamisme de ladite hélice de propulsion 4 et de la rangée annulaire des aubes de stator 6 afin de déterminer le calage angulaire $\beta_2$ de la rangée annulaire d'aubes de stator 6 en fonction de seulement deux paramètres, à savoir ledit angle $\varphi_{12}$ et un nombre de Mach 10 associé à la vitesse du flux d'air incident sur l'hélice de propulsion 4.

La figure 3 illustre un diagramme représentant le procédé de détermination du calage angulaire $\beta_1$ d'une hélice de propulsion 4 et du calage angulaire $\beta_2$ de la rangée annulaire d'aubes de stator 6 en aval de ladite hélice de propulsion 4. Ce procédé 12 peut être implémenté dans un calculateur dudit système propulsif (FADEC - « Full Authority Digital Engine Control »).

Ledit procédé 12 comprend une première étape consistant à établir un modèle théorique 14 de l'hélice de propulsion 4. Pour cela, une puissance $P_1$ et un régime mécanique $N_1$ associés à ladite hélice de propulsion, et les conditions de vol 16 comprenant une vitesse du flux d'air incident Vo sur l'hélice de propulsion, l'altitude dudit système propulsif et la température ambiante sont utilisées en entrée dudit modèle théorique de l'hélice de propulsion. Ce modèle théorique 14 de l'hélice de propulsion 4 permet de déterminer un calage angulaire $\beta_1$ de ladite hélice de propulsion 4. Ladite hélice de propulsion est ainsi modélisée au moyen dudit modèle théorique qui se présente sous la forme d'un tableau comprenant un ensemble de coefficients adimensionnels, comprenant un ratio d'avancement $J_1$, un coefficient de puissance $C_{p,1}$ et un coefficient de traction $C_{T,1}$ définis pour une pluralité de calage angulaire $\beta_1$ de ladite hélice de propulsion 4, pour une pluralité de vitesses de flux d'air incident Vo. En sortie du modèle théorique 14 de l'hélice de propulsion, les paramètres adimensionnés 17 incluant au moins le coefficient de puissance $C_{p,1}$, le coefficient de traction $C_{T,1}$ et le ratio d'avancement $J_1$ de ladite hélice de propulsion 4 pourront être utilisés et seront définis par les formules suivantes :

$$C_{P,1} = \frac{P_1}{\rho \cdot N_1^3 \cdot D_1^5}$$

$$C_{T,1} = \frac{T_1}{\rho \cdot N_1^2 \cdot D_1^4}$$

$$J_1 = \frac{V_0}{N_1 \cdot D_1}$$

où $\rho$ correspond à la densité d'un air ambiant, $V_0$ correspond à une vitesse de vol dudit système propulsif, $N_1$ correspond au dit régime mécanique de ladite hélice de propulsion, $D_1$ correspond à un diamètre de ladite hélice de propulsion, $P_1$

correspond à ladite puissance de ladite hélice de propulsion, $T_1$ correspond à une traction de ladite hélice de propulsion.

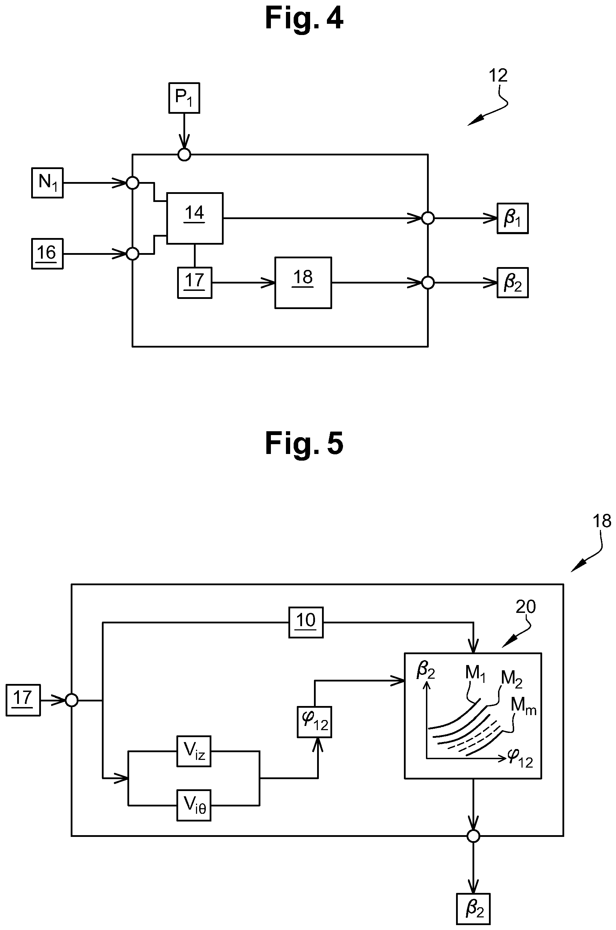

Ces paramètres adimensionnés 17 associés à l'hélice de propulsion 4 sont, ensuite, communiqué à un modèle de calage de la rangée annulaire d'aubes de stator 18, comme illustré en Figure 5. En effet, à partir desdits paramètres adimensionnés 17, la vitesse longitudinale $V_{iz}$ et la composante tangentielle $V_{i\theta}$ sont calculées en se basant sur la loi de conservation de la quantité de mouvement de Froude pour la vitesse longitudinale $V_{iz}$ et sur la loi d'Euler pour la composante tangentielle $V_{i\theta}$. Ces deux vitesses $V_{iz}$ et $V_{i\theta}$ respectent les relations suivantes :

$$V_{iz} = \frac{V_0}{2\,J_1}\left[\sqrt{J_1^2 + K_1 \cdot C_{T,1}} - J_1\right]$$

où $K_1$ est une constante reliée à la dimension radiale de l'hélice de propulsion 4 et :

$$V_{i\theta} = K_2 \cdot \frac{V_0 \cdot C_{P,1}}{J_1} \cdot \frac{1}{J_1 + \sqrt{J_1^2 + K_1 \cdot C_{T,1}}}$$

où $K_1$ et $K_2$ sont des constantes reliées à la dimension radiale de l'hélice de propulsion 4.

Le dit angle $\varphi_{12}$ est ensuite obtenu à partir desdites vitesse longitudinale $V_{iz}$ et composante tangentielle $V_{i\theta}$ en suivant la relation suivante : $\varphi_{12} = \frac{180}{\pi}\tan^{-1}\left(\frac{V_0 + V_{iz}}{V_{i\theta}}\right)$.

Une base de données 20 est préalablement construite. Elle permet d'associer à chaque dit angle $\varphi_{12}$, différents calages angulaires $\beta_2$ de ladite rangée annulaire d'aubes de stator 6 obtenus pour différents nombres de Mach.

Pour réaliser ladite base de données 20, un coefficient de traction $C'_{T,2}$ du redresseur est calculé à partir de la formule suivante :

$$C'_{T,2} = \frac{T_2}{\rho \cdot V_2^2 \cdot D_2^2}$$

où $D_2$ correspond à un diamètre de ladite rangée annulaire d'aubes de stator 6, $T_2$ correspond à une traction de ladite rangée annulaire d'aubes de stator 6 et $V_2$ correspond à la vitesse reçu par ladite rangée annulaire d'aubes de stator 6. Ce coefficient de traction est nécessaire pour créer la base de données.

La base de donnée est une table qui associe à chaque nombre de Mach et angle $\varphi_{12}$ une valeur de calage angulaire $\beta_2$ de ladite rangée annulaire d'aubes de stator 6. Cette base de donnée est construite par simulation ou par essai. Plusieurs conditions de fonctionnement associés à toutes les combinaisons de paramètres sont calculées. Les paramètres considérés sont : le régime rotor N1, le nombre de Mach de vol, le calage angulaire $\beta_1$ de l'hélice de propulsion 4 et le calage angulaire $\beta_2$ de ladite rangée annulaire d'aubes de stator 6. Pour chacun de ces points de fonctionnement, l'angle $\varphi_{12}$ et le coefficient de traction $C'_{T,2}$ sont calculés. Cela donne ainsi une table de coefficient de traction $C'_{T,2}$ fonction du nombre de Mach de vol, de l'angle $\varphi_{12}$ et du calage angulaire $\beta_2$ de ladite rangée annulaire d'aubes de stator 6. Pour chaque nombre de Mach de vol et d'angle $\varphi_{12}$ de cette table, la valeur de calage angulaire $\beta_2$ de ladite rangée annulaire d'aubes de stator 6 qui maximise le coefficient $C'_{T,2}$ est choisi. Ainsi, la loi de pilotage sous forme du calage angulaire $\beta_2$ de ladite rangée annulaire d'aubes de stator 6 en fonction du nombre de Mach et de l'angle $\varphi_{12}$ est obtenu.

La réalisation d'une base de données comme décrit précédemment permet de réaliser rapidement et simplement la détermination de la valeur optimale du calage angulaire $\beta_2$ à appliquer à ladite rangée annulaire d'aubes de stator. Cette base de données peut être intégrée dans une unité de mémoire du FADEC qui ne nécessite pas d'ajout de moyens de calculs complexes.

A partir de cette base de donnée 20, dudit angle $\varphi_{12}$, d'un nombre de Mach 10 associé à la vitesse du flux d'air incident sur l'hélice de propulsion, un calage angulaire $\beta_2$ à appliquer à ladite rangée annulaire d'aubes de stator 6 est déterminé.

Enfin, ledit calage angulaire $\beta_2$ de ladite rangée annulaire d'aubes de stator 6 est communiqué par un système FADEC à des actuateurs qui contrôlent le calage de ladite rangée annulaire d'aubes de stator 6.

Le système et la logique proposés dans le présent document rendent la détermination du calage angulaire $\beta_2$ de la rangée annulaire d'aubes de stator plus facile à implémenter, plus robuste aux changements des conditions de vol 16 et plus facile à stocker dans un FADEC, étant donné que ledit procédé 12 nécessite moins de données. Grâce à cette détermination du calage angulaire $\beta_2$, la rangée annulaire d'aubes de stator 6 fournit toujours la quantité de poussée optimale pour la phase de vol considérée.

## Revendications

1. Procédé de détermination du calage angulaire ($\beta_2$) d'une rangée annulaire d'aubes de stator (6) agencée en aval d'une hélice de propulsion (4) d'un système propulsif (1) d'axe longitudinale (2), ladite rangée annulaire d'aubes de stator (6) recevant un écoulement d'air ayant une vitesse ($V_2$) incluant une composante longitudinale ($V_{iz}$) et une composante tangentielle ($V_{i\theta}$) associées à la vitesse de giration générée par l'hélice de propulsion (4), le procédé comprenant les étapes :

   a) établir un modèle théorique (14) de l'hélice de propulsion (4) utilisant une puissance ($P_1$) et un régime mécanique ($N_1$) associés à ladite hélice de propulsion (4), et les conditions de vol (16) comprenant une vitesse du flux d'air incident sur l'hélice de propulsion (4), l'altitude dudit système propulsif (1) et la température ambiante ;
   b) déterminer un calage angulaire ($\beta_1$) de ladite hélice de propulsion (4) à partir dudit modèle théorique (14) ;
   c) à partir dudit modèle théorique (14) de l'hélice de propulsion (4), définir des paramètres adimensionnés (17) incluant au moins un coefficient de puissance ($C_{p,1}$), un coefficient de traction ($C_{T,1}$) et un ratio d'avancement ($J_1$) de ladite hélice de propulsion (4) définis par les formules suivantes :

$$C_{P,1} = \frac{P_1}{\rho \cdot N_1^3 \cdot D_1^5}$$

$$C_{T,1} = \frac{\bar{T}_1}{\rho \cdot N_1^2 \cdot D_1^4}$$

$$J_1 = \frac{V_0}{N_1 \cdot D_1}$$

   Où

   $\rho$ correspond à la densité d'un air ambiant,
   $V_0$ correspond à une vitesse de vol dudit système propulsif,
   $N_1$ correspond au dit régime mécanique de ladite hélice de propulsion,
   $D_1$ correspond à un diamètre de ladite hélice de propulsion,
   $P_1$ correspond à ladite puissance de ladite hélice de propulsion,
   $T_1$ correspond à une traction de ladite hélice de propulsion.

   d) calculer la composante longitudinale ($V_{iz}$) et la composante tangentielle ($V_{i\theta}$) de ladite vitesse ($V_2$) du flux d'air incident sur ladite rangée annulaire d'aubes de stator (6) à partir desdits paramètres adimensionnés (16) et en déduire un angle ($\varphi_{12}$) entre ladite vitesse du flux d'air incident sur ladite rangée annulaire d'aubes de stator (6) et un plan de rotation (8) de ladite hélice de propulsion (4) ;
   e) déterminer un calage angulaire ($\beta_2$) à appliquer à ladite rangée annulaire d'aubes de stator (6) à partir dudit angle ($\varphi_{12}$), d'un nombre de Mach (10) associé à la vitesse du flux d'air incident sur l'hélice de propulsion (4) et d'une base de données (20) associant à chaque dit angle ($\varphi_{12}$), différents calages angulaires ($\beta_2$) de ladite rangée annulaire d'aubes de stator (6) obtenus pour différents nombres de Mach (10).

2. Procédé selon la revendication 1, dans lequel ladite composante longitudinale ($V_{iz}$) de ladite vitesse ($V_2$) du flux d'air incident sur la rangée annulaire d'aubes de stator (6) est calculée à partir de la formule suivante :

$$V_{iz} = \frac{V_0}{2 J_1} \left[ \sqrt{J_1^2 + K_1 . C_{T,1}} - J_1 \right]$$

où $K_1$ est une constante reliée à la dimension radiale de l'hélice de propulsion (4).

**3.** Procédé selon la revendication 1 ou 2, dans lequel ladite composante tangentielle ($V_{i\theta}$) de ladite vitesse ($V_2$) du flux d'air incident sur la rangée annulaire d'aubes de stator (6) est calculée à partir de la formule suivante :

$$V_{i\theta} = K_2 \cdot \frac{V_0 \cdot C_{P,1}}{J_1} \cdot \frac{1}{J_1 + \sqrt{J_1^2 + K_1 \cdot C_{T,1}}}$$

où $K_1$ et $K_2$ sont des constantes reliées à la dimension radiale de l'hélice de propulsion (6).

**4.** Procédé selon les revendications 1 à 3, dans lequel ledit angle ($\varphi_{12}$) suit la formule suivante :

$$\varphi_{12} = \frac{180}{\pi} \tan^{-1} \left( \frac{V_0 + V_{iz}}{V_{i\theta}} \right)$$

**5.** Procédé selon l'une des revendications précédentes, dans lequel ledit calage angulaire ($\beta_2$) de ladite rangée annulaire d'aubes de stator (6) est communiqué par un système FADEC à des actuateurs qui contrôlent le calage angulaire ($\beta_2$) de ladite rangée annulaire d'aubes de stator (6).

**6.** Procédé selon l'une des revendications précédentes, dans lequel la base de données (20) est une table construite par simulation ou essai dans laquelle plusieurs conditions de fonctionnement sont calculées à partir de toutes les combinaisons des paramètres tels que le régime rotor N1, le nombre de Mach de vol, le calage angulaire $\beta_1$ de l'hélice de propulsion (4) et le calage angulaire $\beta_2$ de ladite rangée annulaire d'aubes de stator 6, donnant une table de coefficient de traction $C'_{T,2}$ maximisé en fonction du nombre de Mach de vol, de l'angle $\varphi_{12}$ et du calage angulaire $\beta_2$ de ladite rangée annulaire d'aubes de stator (6).

**Patentansprüche**

**1.** Verfahren zum Bestimmen einer Winkeleinstellung ($\beta_2$) einer ringförmigen Reihe von Statorschaufeln (6), die stromabwärts eines Antriebspropellers (4) eines Antriebssystems (1) mit einer Längsachse (2) angeordnet ist, wobei die ringförmige Reihe von Statorschaufeln (6) einen Luftstrom mit einer Geschwindigkeit ($V_2$) empfängt und eine Längskomponente ($V_{iz}$) und eine Tangentialkomponente ($V_{i\theta}$) aufweist, die mit einer durch den Antriebspropeller (4) erzeugten Giergeschwindigkeit verbunden sind, wobei das Verfahren die folgenden Schritte umfasst:

a) Erstellen eines theoretischen Modells (14) des Antriebspropellers (4) unter Verwendung einer Leistung ($P_1$) und einer mechanischen Drehzahl ($N_1$), die mit dem Antriebspropeller (4) verbunden sind, sowie von Flugbedingungen (16), die eine Geschwindigkeit des auf den Antriebspropeller (4) auftreffenden Luftstroms, eine Höhe des Antriebssystems (1) und die Umgebungstemperatur umfassen;
b) Bestimmen einer Winkeleinstellung ($\beta_1$) des Antriebspropellers (4) anhand des theoretischen Modells (14);
c) Definieren dimensionsloser Parameter (17) anhand des theoretischen Modells (14) des Antriebspropellers (4), zu denen mindestens ein Leistungskoeffizient ($C_{p,1}$), ein Zugkoeffizient ($C_{T,1}$) und ein Vorschubverhältnis ($J_1$) des Antriebspropellers (4) gehören, die durch die folgenden Formeln definiert werden:

$$C_{P,1} = \frac{P_1}{\rho \cdot N_1^3 \cdot D_1^5}$$

$$C_{T,1} = \frac{T_1}{\rho \cdot N_1^2 \cdot D_1^4}$$

$$J_1 = \frac{V_0}{N_1 \cdot D_1}$$

wobei

$\rho$ der Dichte einer Umgebungsluft entspricht,
$V_0$ einer Fluggeschwindigkeit des Antriebssystems entspricht,
$N_1$ der mechanischen Drehzahl des Antriebspropellers entspricht,
$D_1$ einem Durchmesser des Antriebspropellers entspricht,
$P_1$ der Leistung des Antriebspropellers entspricht,
$T_1$ einem Zug des Antriebspropellers entspricht;

d) Berechnen der Längskomponente ($V_{iz}$) und der Tangentialkomponente ($V_{i\theta}$) der Geschwindigkeit ($V_2$) des auf die ringförmige Reihe von Statorschaufeln (6) auftreffenden Luftstroms anhand der dimensionslosen Parameter (16) und Ableiten eines Winkels ($\varphi_{12}$) zwischen der Geschwindigkeit des auf die ringförmige Reihe von Statorschaufeln (6) auftreffenden Luftstroms und einer Rotationsebene (8) des Antriebspropellers (4); und

e) Bestimmen einer Winkeleinstellung ($\beta_2$), die auf die ringförmige Reihe von Statorschaufeln (6) anzuwenden ist, aus dem Winkel ($\varphi_{12}$), einer Mach-Zahl (10), die mit der Geschwindigkeit des auf den Antriebspropeller (4) auftreffenden Luftstroms verbunden ist, und einer Datenbank (20), die jeden Winkel ($\varphi_{12}$) mit verschiedenen Winkeleinstellungen ($\beta_2$) der ringförmigen Reihe von Statorschaufeln (6) verbindet, die für unterschiedliche Mach-Zahlen (10) erhalten wurden.

2. Verfahren nach Anspruch 1, wobei die Längskomponente ($V_{iz}$) der Geschwindigkeit ($V_2$) des auf die ringförmige Reihe von Statorschaufeln (6) auftreffenden Luftstroms anhand der folgenden Formel berechnet wird:

$$V_{iz} = \frac{V_0}{2\,J_1}\left[\sqrt{J_1^2 + K_1\,.\,C_{T,1}} - J_1\right]$$

wobei $K_1$ eine Konstante ist, die sich auf eine radiale Abmessung des Antriebspropellers (4) bezieht.

3. Verfahren nach Anspruch 1 oder 2, wobei die Tangentialkomponente ($V_{i\theta}$) der Geschwindigkeit ($V_2$) des auf die ringförmige Reihe von Statorschaufeln (6) auftreffenden Luftstroms anhand der folgenden Formel berechnet wird:

$$V_{i\theta} = K_2 \cdot \frac{V_0\,.\,C_{P,1}}{J_1} \cdot \frac{1}{J_1 + \sqrt{J_1^2 + K_1\,.\,C_{T,1}}}$$

wobei $K_1$ oder $K_2$ Konstanten sind, die sich auf eine radiale Abmessung des Antriebspropellers (4) beziehen.

4. Verfahren nach den Ansprüchen 1 bis 3, wobei der Winkel ($\varphi_{12}$) der folgenden Formel folgt:

$$\varphi_{12} = \frac{180}{\pi}\tan^{-1}\left(\frac{V_0 + V_{iz}}{V_{i\theta}}\right)$$

5. Verfahren nach einem der vorhergehenden Ansprüche, wobei die Winkeleinstellung ($\beta_2$) der ringförmigen Reihe von Statorschaufeln (6) durch ein FADEC-System an Aktuatoren übermittelt wird, die die Winkeleinstellung ($\beta_2$) der ringförmigen Reihe von Statorschaufeln (6) steuern.

6. Verfahren nach einem der vorhergehenden Ansprüche, wobei die Datenbank (20) eine durch Simulation oder Tests erstellte Tabelle ist, in der mehrere Betriebsbedingungen anhand aller Kombinationen von Parametern wie der Rotordrehzahl N1, der Flug-Machzahl, der Winkelstellung $\beta_1$ des Antriebspropellers (4) und der Winkeleinstellung $\beta_2$ der ringförmigen Reihe von Statorschaufeln 6 berechnet werden, wodurch eine Tabelle des maximierten Zugkoeffizienten $C'_{T,2}$ als Funktion der Flug-Machzahl, des Winkels $\varphi_{12}$ und der Winkeleinstellung $\beta_2$ der ringförmigen Reihe von Statorschaufeln (6) erhalten wird.

**Claims**

1. Method for determining the angular setting ($\beta_2$) of an annular row of stator vanes (6) arranged downstream of a propeller (4) of a propulsion system (1) having a longitudinal axis (2), said annular row of stator vanes (6) receiving a flow of air having a speed ($V_2$) including a longitudinal component ($V_{iz}$) and a tangential component ($V_{i\theta}$) associated with the speed of gyration generated by the propeller (4), the method comprising the steps:

    a) establishing a theoretical model (14) of the propeller (4) using a power ($P_1$) and a mechanical speed ($N_1$) associated with said propeller (4), and the flight conditions (16) comprising a speed of the stream of incident air on the propeller (4), the altitude of said propulsion system (1) and the ambient temperature;
    b) determining an angular setting ($\beta_1$) of said propeller (4) from said theoretical model (14);
    c) on the basis of said theoretical model (14) of the propeller (4), defining nondimensionalised parameters (17) including at least a power coefficient ($C_{p,1}$), a traction coefficient ($C_{T,1}$) and a ratio of forward movement ($J_1$) of said propeller (4) defined by the following formulas:

$$C_{P,1} = \frac{P_1}{\rho \cdot N_1^3 \cdot D_1^5}$$

$$C_{T,1} = \frac{\tilde{T}_1}{\rho \cdot N_1^2 \cdot D_1^4}$$

$$J_1 = \frac{V_0}{N_1 \cdot D_1}$$

in which

    $\rho$ corresponds to the density of an ambient air,
    $V_0$ corresponds to a flight speed of said propulsion system,
    $N_1$ corresponds to said mechanical speed of said propeller,
    $D_1$ corresponds to a diameter of said propeller,
    $P_1$ corresponds to said power of said propeller,
    $T_1$ corresponds to a traction of said propeller;

    d) calculating the longitudinal component ($V_{iz}$) and the tangential component ($V_{i\theta}$) of said speed ($V_2$) of the stream of incident air on said annular row of stator vanes (6) from said nondimensionalised parameters (16) and deducing therefrom an angle ($\varphi_{12}$) between said speed of the stream of incident air on said annular row of stator vanes (6) and a plane of rotation (8) of said propeller (4);
    e) determining an angular setting ($\beta_2$) to be applied to said annular row of stator vanes (6) from said angle ($\varphi_{12}$), from a Mach number (10) associated with the speed of the stream of incident air on the propeller (4) and from a database (20) associating with each said angle ($\varphi_{12}$) various angular settings ($\beta_2$) of said annular row of stator vanes (6) obtained for various Mach numbers (10).

2. Method according to claim 1, wherein said longitudinal component ($V_{iz}$) of said speed ($V_2$) of the stream of incident air on the annular row of stator vanes (6) is calculated from the following formula:

$$V_{iz} = \frac{V_0}{2 J_1} \left[ \sqrt{J_1^2 + K_1 \cdot C_{T,1}} - J_1 \right]$$

in which $K_1$ is a constant linked to the radial dimension of the propeller (4).

3. Method according to claim 1 or 2, wherein said tangential component ($V_{i\theta}$) of said speed ($V_2$) of the stream of incident air on the annular row of stator vanes (6) is calculated from the following formula:

$$V_{i\theta} = K_2 \cdot \frac{V_0 \cdot C_{P,1}}{J_1} \cdot \frac{1}{J_1 + \sqrt{J_1^2 + K_1 \cdot C_{T,1}}}$$

in which $K_1$ and $K_2$ are constants linked to the radial dimension of the propeller (4).

4. Method according to claims 1 to 3, wherein said angle ($\varphi_{12}$) follows the following formula:

$$\varphi_{12} = \frac{180}{\pi} \tan^{-1}\left(\frac{V_0 + V_{iz}}{V_{i\theta}}\right)$$ .

5. Method according to one of the preceding claims, wherein said angular setting ($\beta_2$) of said annular row of stator vanes (6) is communicated by a FADEC system to actuators that control the angular setting ($\beta_2$) of said annular row of stator vanes (6).

6. Method according to one of the preceding claims, wherein said database (20) is a table built by simulation or trial in which several operating conditions are calculated from all the combinations of parameters such as the rotor speed (N1), the flight Mach number, the angular setting ($\beta_1$) of the propeller (4) and the angular setting ($\beta_2$) of said annular row of stator vanes (6), giving a table of maximised traction coefficient ($C'_{T,2}$) according to the flight Mach number, the angle ($\varphi_{12}$) and the angular setting ($\beta_2$) of said annular row of stator vanes (6).

**Fig. 1**

4

6

1

2

**Fig. 2**

2

$V_0$

$\beta_1$

4

8

**Fig. 3**

$\beta_2$

$\varphi_{12}$

2

$V_0$  $V_2$

$V_{iz}$

$V_{i\theta}$

8

6

# Fig. 4

# Fig. 5

**EP 4 132 847 B1**

## RÉFÉRENCES CITÉES DANS LA DESCRIPTION

**Documents brevets cités dans la description**

- EP 3159523 A1